# EUROPEAN PATENT APPLICATION

(11) **EP 2 528 334 A1**
(43) Date of publication of application: **28.11.2012**
(21) Application number: 11734589.2
(22) Date of filing: 14.01.2011
(51) Int. Cl.: H04N 13/00, G09G 5/00, G09G 5/36, G09G 5/377, H04N 7/173, H04N 7/26

(54) **RECEPTION DEVICE, TRANSMISSION DEVICE, COMMUNICATION SYSTEM, METHOD FOR CONTROLLING RECEPTION DEVICE, AND PROGRAM**

(30) Priority: 22.01.2010 JP 2010012204
(71) Applicant: Sony Corporation, Tokyo 108-0075 (JP)
(72) Inventor: TSUKAGOSHI, Ikuo, Tokyo 108-0075 (JP)
(74) Representative: Horner, David Richard
(86) International application number: PCT/JP2011/050548
(87) International publication number: WO 2011/089982

(57) **Abstract**

Provided is a receiving apparatus including a first decoder which decodes a first image signal, a second decoder which decodes a second image signal corresponding to an image of at least a part of a region of a first image frame of the first image signal, a CPU which acquires object indication information including spatial position information of the region with respect to the first image frame, and an object reconstruction part which has the image of the region overwrite the first image frame to generate a second image frame based on the position information.

## Description

### Technical Field

The present invention relates to a receiving apparatus, a transmitting apparatus, a communication system, a receiving apparatus control method, and a program.

### Background Art

Conventionally, various systems for displaying 3-dimensional stereoscopic videos (3D videos) are known. For example, as described in the following Patent Literatures 1 to 3, methods are known in which an image for left eyes and an image for right eyes with a parallax are alternately provided to the display at a prescribed period, and the images are observed with a pair of eyeglasses provided with a liquid crystal shutter which is synchronized and driven at a prescribed period.

### Citation List

### Patent Literature

Patent Literature 1: JP 9-138384A
Patent Literature 2: JP 2000-36969A
Patent Literature 3: JP 2003-45343A

### Summary of Invention

### Technical Problem

In order to transmit a 3D video from a broadcasting station, both the image for left eyes and the image for right eyes need to be transmitted. To secure a similar image quality to an existing 2D video, therefore, it is necessary to transmit two-fold data, and a double transmission band is also required compared to that of a 2D video. However, as the transmission band of broadcasting waves or delivery data via a network is limited, there is difficulty in increasing the transmission band. Also, in the event of transmitting the two-fold data, a decoder in a receiving apparatus might become overloaded.

Also, as a format of transmitting a 3D video, techniques such as a side-by-side scheme are known. In the side-by-side scheme, one frame is divided into multiple views and then transmitted. As one frame is divided into multiple views, deterioration of image quality cannot be avoided. Further, when video data is transmitted in such a 3D video format, 2D video television receivers which have been widely spread to users cannot perform correct display, and thus the users cannot view either 2D videos or 3D videos properly.

Accordingly, the present invention has been realized in view of the above problem, and an object of the invention is to provide a novel and improved receiving apparatus, transmitting apparatus, communication system, receiving apparatus control method, and program which enable the users to view 3D videos with a simple structure.

### Solution to Problem

According to one aspect of the present invention in order to achieve the above-mentioned object, there is provided a receiving apparatus including a first decoder for decoding a first image signal, a second decoder for decoding a second image signal corresponding to an image of at least a part of a region of a first image frame of the first image signal, an information acquisition part for acquiring object indication information including spatial position information of the region with respect to the first image frame, and a video overwriting part for having the image of the region overwrite the first image frame to generate a second image frame based on the position information.

Further, the receiving apparatus may include a display for displaying an image of the first image frame and an image of the second image frame periodically.

Furthermore, the first image frame may be a moving image frame, the object indication information may include temporal synchronization information of the image of the region with respect to the first image frame, and the video overwriting part may have the image of the region overwrite the first image frame based on the position information and the synchronization information.

Furthermore, the object indication information may be included in a picture header of the image frames of the first image signal or the second image signal.

Furthermore, the object indication information may be transmitted in a separate stream from the first image signal and the second image signal, and may be associated with the first image signal and the second image signal by a timestamp.

Furthermore, the information acquisition part may not acquire the object indication information in a case where a size of the first image frame of the first image signal and a size of the image frame of the second image signal are the same.

Furthermore, the first decoder and the second decoder may execute respective decoding by different decoding methods.

According to another aspect of the present invention in order to achieve the above-mentioned object, there is provided a transmitting apparatus including a first encoder for encoding a first image signal, a second encoder for encoding a second image signal corresponding to an image of at least a part of a region of an image frame of the first image signal, and a transmitter for transmitting the encoded first image signal, the encoded second image signal, and object indication information including spatial position information of the region with respect to the image frame.

Further, the image frame may be a moving image frame, and the object indication information may include temporal synchronization information of the image of the region of the image frame.

Furthermore, the object indication information may be inserted into a picture header of the image frame of the first image signal or the second image signal.

Furthermore, the object indication information may be transmitted in a separate stream from the first image signal and the second image signal, and may be associated with the first image signal and the second image signal by a timestamp.

Furthermore, the transmitting apparatus may include an image separation part for separating the image of the region from the image frame, and the second encoder may encode the second image signal corresponding to the image of the region separated by the image separation part.

Furthermore, the image separation part may separate the image of the region from the image frame while changing a position of the region within the image frame in accordance with a movement of an object corresponding to the region.

Furthermore, the transmitter may not transmit the object indication information in a case where a size of the first image frame of the first image signal and a size of the image frame of the second image signal are the same.

Furthermore, the first encoder and the second encoder may execute respective encoding by different encoding methods.

Further, according to another aspect of the present invention in order to achieve the above-mentioned object, there is provided a communication system including a transmitting apparatus which includes a first encoder for encoding a first image signal, a second encoder for encoding a second image signal corresponding to an image of at least a part of a region of an image frame of the first image signal, and a transmitter for transmitting the encoded first image signal, the encoded second image signal, and object indication information including spatial position information of the region with respect to the image frame, and a receiving apparatus which includes a first decoder for decoding the first image signal, a second decoder for decoding the second image signal, an information acquisition part for acquiring the object indication information, and a video overwriting part for having the image of the region overwrite the first image frame of the first image signal to generate a second image frame based on the position information included in the object indication information.

Further, according to another aspect of the present invention in order to achieve the above-mentioned object, there is provided a receiving apparatus control method including the steps of decoding a first image signal, decoding a second image signal corresponding to an image of at least a part of a region of a first image frame of the first image signal, acquiring object indication information including spatial position information of the region with respect to the first image frame, and having the image of the region overwrite the first image frame based on the position information to generate a second image frame.

Further, according to another aspect of the present invention in order to achieve the above-mentioned object, there is provided a program for causing a computer to function as means for decoding a first image signal, means for decoding a second image signal corresponding to an image of at least a part of a region of a first image frame of the first image signal, means for acquiring object indication information including spatial position information of the region with respect to the first image frame, and means for having the image of the region overwrite the first image frame based on the position information to generate a second image frame.

Further, according to another aspect of the present invention in order to achieve the above-mentioned object, there is provided a receiving apparatus including a first decoder for decoding a first image signal, an information acquisition part for acquiring spatial position information of at least a part of a region of a first image frame of the first image signal, and object indication information including an offset amount of the region of the first image frame, and a video image overwriting part for having the image of the region overwrite the first image frame to generate a second image frame based on the object indication information.

Further, according to another aspect of the present invention in order to achieve the above-mentioned object, there is provided a receiving apparatus including a first decoder for decoding a first image signal corresponding to a first image clipped from a source image of a still image, a second decoder for decoding a second image signal corresponding to a second image clipped from a source image of a still image, a position information acquisition part for acquiring spatial position information of the first image and the second image, and a display for displaying the first image and the second image periodically in a state that the first image and the second image are relatively offset based on the position information.

### Advantageous Effects of Invention

According to the present invention, a receiving apparatus, a transmitting apparatus, a communication system, a receiving apparatus control method, and a program which enable the uses to view 3D videos with a simple structure can be provided.

### Brief Description of Drawings

[Fig. 1] Fig. 1 is a schematic diagram illustrating a structure of a stereoscopic image displaying/observing system according to an embodiment of the present invention.
[Fig. 2] Fig. 2 is a schematic diagram illustrating a configuration example of a transmitting apparatus according to an embodiment of the present invention.
[Fig. 3] Fig. 3 is a schematic diagram illustrating a configuration of a target separation part in detail.
[Fig. 4] Fig. 4 is a schematic diagram for explaining an encoding process in the transmitting apparatus.
[Fig. 5] Fig. 5 is a schematic diagram for explaining an encoding process in the transmitting apparatus.
[Fig. 6] Fig. 6 is a schematic diagram for explaining an encoding process in the transmitting apparatus.
[Fig. 7] Fig. 7 is a schematic diagram illustrating object indication information for 3D object display.
[Fig. 8] Fig. 8 is a schematic diagram illustrating a definition of 3D_descriptor.
[Fig. 9] Fig. 9 is a schematic diagram illustrating information designated by Vertical_Start_Position, Horizontal_Start_Position, Vertical_End_Position, and Horizontal_End_Position in Fig. 7.
[Fig. 10] Fig. 10 is a schematic diagram illustrating an example of adding 3D information to a primary video when 3D information is added to a bit stream of video data.
[Fig. 11] Fig. 11 is a schematic diagram illustrating an example of adding 3D information to a primary video when a display time can be changed as a secondary video is a still image or the like.
[Fig. 12] Fig. 12 is a schematic diagram illustrating an example of adding 3D information to a secondary video and of synchronizing a primary video and a secondary video per picture of a moving image.
[Fig. 13] Fig. 13 is a schematic diagram illustrating an example of adding 3D information to a secondary video when a display time can be changed as the secondary video is a still image or the like.
[Fig. 14] Fig. 14 is a schematic diagram illustrating a configuration example of a receiving apparatus.
[Fig. 15] Fig. 15 is a schematic diagram illustrating a process in an object reconstruction part.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description will be performed in the following order.
1. A configuration example of a system
2. A configuration example of a transmitting apparatus
3. Information for 3D object display
4. A configuration example of a receiving apparatus

### [1. A configuration example of a system]

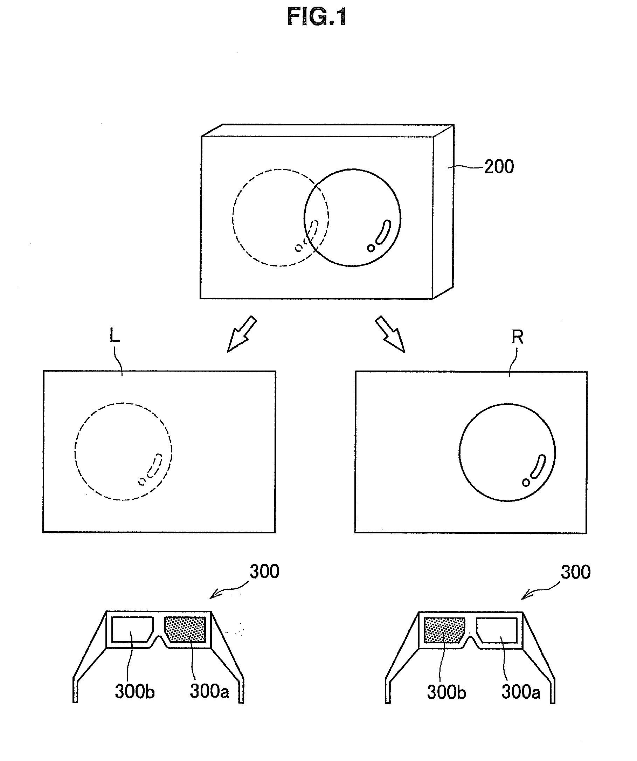

Fig. 1 is a schematic diagram illustrating a structure of a stereoscopic image displaying/observing system according to an embodiment of the present invention. The system according to the present invention includes a transmitting apparatus 100 for transmitting video content and the like in a digital broadcasting format, a television receiver (receiving apparatus) 200 provided with a display panel including a LCD, for example, and a pair of display image appreciation eyeglasses 300. Fig. 1 shows the receiving apparatus 200 and the pair of display image appreciation eyeglasses 300.

The receiving apparatus 200 is a television receiver which receives a terrestrial digital broadcasting and the like, and receives and decodes a bit stream of video data and displays it on the display panel. The receiving apparatus 200 time-divides a video to alternately display the video on an entire screen at an extremely short period based on the video data transmitted from the transmitting apparatus. Also, the receiving apparatus 200 is capable of providing a video separately to a left eye and a right eye by synchronizing with display periods of a video for left eyes and a video for right eyes. The receiving apparatus 200, for example, alternately displays an image R for right eyes and an image L for left eyes per field. The display image appreciation eyeglasses 300 include a pair of liquid crystal shutters 300a and 300b at portions corresponding to lenses. The liquid crystal shutters 300a and 300b synchronize with image switching of every field of the receiving apparatus 200, and perform open-close operation by turns. That is, in a field of the receiving apparatus 200 where the image R for right eyes is displayed, the liquid crystal shutter 300b for left eyes is closed while the liquid crystal shutter 300a for right eyes is opened. Also, in a field where the image L for left eyes is displayed, a reverse operation is performed. In this way, the receiving apparatus 200 alternately displays a video R for right eyes and a video L for left eyes on an entire screen at an extremely short period while synchronizing with display periods of the video L for left eyes and the video R for right eyes to provide videos to a left eye and a right eye separately.

With such an operation, only the image R for right eyes enters the right eye of the user and only the image L for left eyes enters the left eye of the user who wears the appreciation eyeglasses 300, and looks at the receiving apparatus 200. Consequently, the images for right eyes and for left eyes are combined inside the eyes of the user, and an image displayed on the receiving apparatus 200 can be recognized in three dimensions. Also, when the user does not use the appreciation eyeglasses 300, the receiving apparatus 200 is capable of displaying a normal 2-dimensional image. In this case, switching of the image R for right eyes and the image L for left eyes is not performed.

Note that, Fig. 1 illustrates a system provided with the display image appreciation eyeglasses 300. However, the present embodiment is not limited to the system and can be applied to a stereoscopic image displaying/observing system such as a polarization plate system which does not require the eyeglasses 300.

Here, the television receivers which have been widely spread to the users' homes at the present moment (hereinafter, the television receiver may be referred to as a legacy television receiver) assume a 2D decoding. Therefore, until television receivers which assume a 3D video viewing are spread, it is desirable that the widely-spread television receivers can provide the 3D video viewing. Thus, a method using the 2D video data currently transmitted with broadcasting waves as one of left and right images and additionally transmitting the same amount of data and using the data as the other of the left and right images can be considered. However, in this case, the transmission band becomes double compared to the present transmission band. Since the transmission band for the broadcasting wave is limited, there is difficulty in realizing the 3D video viewing by transmitting the additional video data. Further, in this case, when the data received by the normal television receiver tries to be decoded, a decoder becomes overloaded as the decoder needs to cover a decoding load for two channels, and a normal decoding would not be performed. Therefore, even if the additional data is transmitted, it is assumed that the normal television receiver cannot treat the data as a 3D format.

Therefore, in order to realize the 3D viewing by using the television receivers which have been widely spread to the users, it is necessary to realize the 3D viewing by minimizing and transmitting the additional image data. In this way, during an introduction period until the 3D television receivers are widely spread, the 3D viewing becomes possible with the 2D television receivers, and 3D videos can be widely provided to the public.

In the meantime, as formats for transmitting the image L for left eyes and the image R for right eyes, techniques such as side-by-side or top-and-bottom are known in which a screen is divided into multiple views, and the multiple views are transmitted. However, as the 2D television receivers which have been widely spread to the public do not support such formats, a correct 3D display cannot be performed. Also, even if the television receivers support the formats, image quality deteriorates to one-half of that of transmitting a normal 2D image because one frame includes right and left video data.

In the present embodiment, with respect to a source image including more than 2 views, the transmitting apparatus 100 extracts and clips only a region to be 3D-displayed, encodes the region along with relative position information with respect to a basic view, and transmits it to the receiving apparatus 200 as additional view video data. As for the basic view, its entire video data are transmitted. On the other hand, as for the additional view, only the video data which is clipped from the basic view is transmitted. Consequently, the video which does not have a parallax with respect to the basic view is not transmitted as the additional view, and the receiving apparatus 200 copies the basic view video to the additional view as for the video which does not have a parallax with respect to the basic view. Accordingly, the receiving apparatus 200 decodes only the video data which have been clipped from the basic view regarding the additional view, and this decreases the decoding process drastically. Therefore, the receiving apparatus 200 can perform the decoding by a surplus load at a CPU and the decoding of 3D video data with a very simple structure can be realized.

Note that, in the embodiments to be described hereinafter, video data are not limited to moving images, and still images can be added to the moving images of the basic view as the additional view. Further, the basic view and the additional view can be respectively applied to a display of a slideshow as a still image. In that case, an encoding scheme is independent of the video data formats, and the encoding schemes of the basic view and the additional view can be the same scheme, or can adopt different schemes.

### [2. A configuration example of a transmitting apparatus]

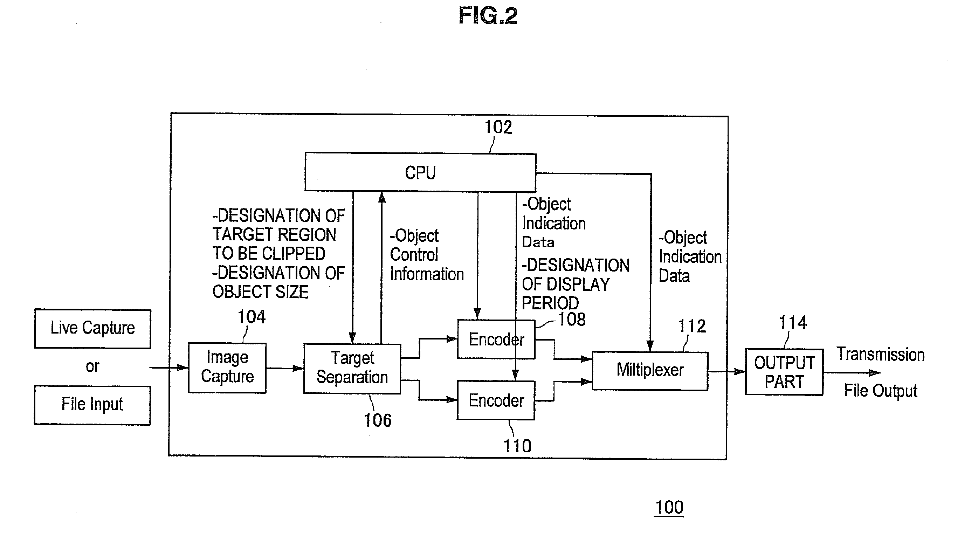

Fig. 2 is a schematic diagram illustrating a configuration example of the transmitting apparatus 100 according to an embodiment of the present invention. The transmitting apparatus 100 is a device at a broadcasting station for providing video content such as television programs, for example. The transmitting apparatus 100 provides the video content to a television receiver in a data format such as a digital broadcasting format.

As shown in Fig. 2, the transmitting apparatus 100 includes a CPU 102, an image capture part 104, a target separation part 106, a first encoder 108, a second encoder 110, a multiplexer 112, and an output part 114.

In the present embodiment, with respect to a source image including more than 2 views, the transmitting apparatus extracts and clips a region to be 3D-displayed, encodes the region along with relative position information with respect to a basic view, and passes the region to the encoders.

To be more specific, regarding a live video captured by the image capture part 104, or an input of a video file, the target separation part 106 performs a process of clipping a region to be 3D-displayed from a video of the basic view upon receiving designation of a target region to be clipped (a size of an object) from the CPU 102. The target separation part 106 transmits control information of the clipped region (object control information) to the CPU 102, and the CPU 102 transmits indication data of the clipped region, and data for designating a display period (object indication information) to the encoders 108 and 110.

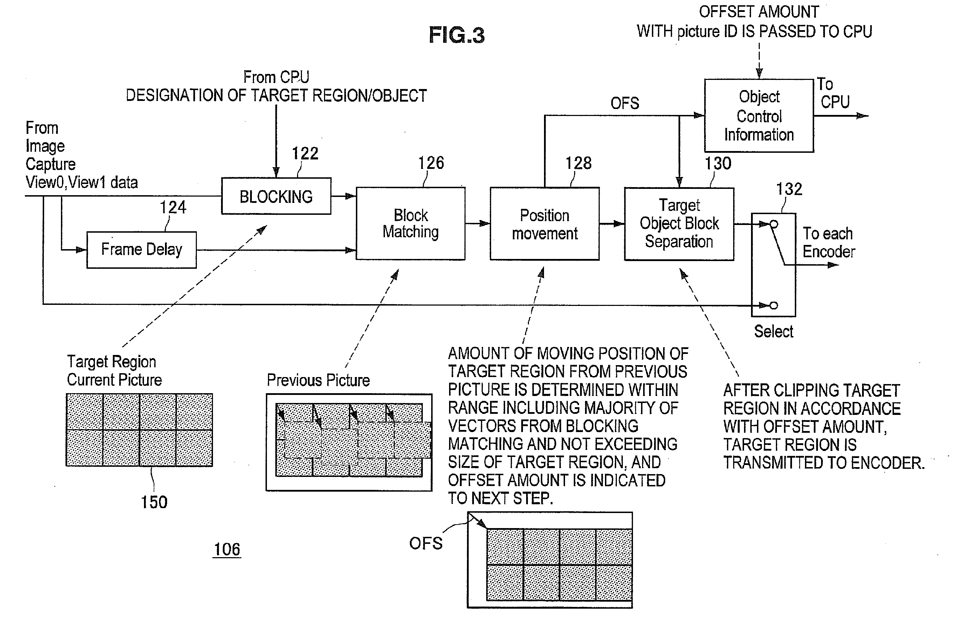

Fig. 3 is a schematic diagram illustrating a configuration of the target separation part 106 in detail. As shown in Fig. 3, the target separation part 106 includes a blocking part 122, a frame delay part 124, a block matching part 126, a position movement part 128, a target object block separation part 130, and a selector 132. Note that, each function block shown in Figs. 2 and 3 can be constituted by a circuit (hardware), or the CPU 102 and software (program) for causing the CPU 102 to function. In this case, the program can be stored in a storage medium such as a memory that the transmitting apparatus 100 includes, or a storage medium outside the transmitting apparatus 100.

In the present embodiment, a video of the basic view is referred to as a primary video, and a video of another view which is clipped from the primary view is referred to as a secondary video. As an example, the primary video as the basic view can be a normal 2D video. The target separation part 106 detects a movement of a region to be clipped from the primary video, and change the region to be clipped in response to the movement. When only a human face is clipped from the basic view, for example, a process becomes possible in which a region to be clipped can be changed in response to a movement of the face. The receiving apparatus 200 can display a face protruded forward of the screen with a 3D effect while moving the face on the screen.

The primary video as the basic view is input to the blocking part 122 and the frame delay part 124 shown in Fig. 3. The blocking part 122 receives information which designates a target region to be clipped (or an object) from the CPU 102 for a secondary video clipping. The blocking part 122 performs a process for blocking a current picture of a target region to be clipped 150 based on an instruction from the CPU 102. Consequently, the current picture of the target region 150 is divided into multiple rectangular blocks.

The frame delay part 124 delays a frame, and the block matching part 126 performs a block matching of the blocked current picture and a delayed previous picture, and acquires a moving vector which indicates each block's movement. The position movement part 128 moves the target region based on the moving vector. The position movement part 128, in response to a processing result at the block matching part 126, determines an offset amount OFS by which the target region moves from a previous picture within a range including majority of vectors among multiple moving vectors corresponding to each block and not exceeding the size of the target region, and transmits the offset amount OFS to a next step. Also, the position movement part 128 transmits the offset amount OFS to the CPU 102 as object control information.

Video data per frame is input to the target object block separation part 130. The target object block separation part 130 clips the target region per frame in accordance with the offset amount OFS, and sends it to the selector 132. Also, the primary video as the basic view is input to the selector 132. The selector 132 alternately switches the input video from the target object block separation part 130 and the original primary video, and sends them to the first and second encoders 108 and 110.

At this point, the original primary video is input to the first encoder 108, and the video clipped at the target object block separation part 130 is sent to the second encoder 110. The first encoder 108 encodes the primary video data as the original video, while the second encoder 110 encodes the clipped secondary video data. Here, the clipped video sent to the second encoder 110 may change its region in response to the movement of the target region 150. Therefore, even if a target region for a 3D display or a target object for a 3D display involves movements, a 3D display is always possible in accordance with the movements of the region or the object.

The primary and secondary video data encoded at the first encoder 108 and the second encoder 110 are multiplexed at the multiplexer 112, and are sent to the output part 114 along with audio data, text data and the like. The output part 114 transmits the multiplexed video data, the audio data, and the text data to the receiving apparatus 200 in a digital broadcasting signal format.

Note that the transmitting apparatus 100 only sends the primary video to the receiving apparatus 200 when transmitting a normal 2D video. In this case, clipping of the secondary video is not performed.

As described above, in the present embodiment, regarding the primary video (as an example, a normal 2D video), since only the region to be 3D-displayed is clipped and sent to the receiving apparatus 200, only the minimum data necessary for a 3D display can be transmitted to the receiving apparatus 200. Therefore, the configuration of the decoder in the receiving apparatus 200 can be minimized, and decoding can be done with a surplus load of the CPU of the receiving apparatus 200. Accordingly, the receiving apparatus 200 can be configured to be simple.

Next, relative position information of the secondary video with respect to the primary video will be described. Details will be described later, but the receiving apparatus 200 which receives the primary video and the secondary video uses the primary video as a 1 st view, and uses, as a 2nd view, a video obtained by the secondary video overwriting the primary view. Then, the receiving apparatus 200 performs a 3D display by alternately displaying the 1st view and the 2nd view.

Therefore, the transmitting apparatus 100 transmits, to the receiving apparatus 200, the primary video and the secondary video as well as the relative position information which designates a position of the secondary video with respect to the primary video. Consequently, the receiving apparatus 200 can have the secondary video overwrite at a right position of the primary video. The relative position information of the secondary video with respect to the primary video is inserted into an auxiliary data region of a picture layer of an encoding stream, for example. Here, if the relative position information does not exist at the auxiliary data region, the receiving apparatus 200 determines that the secondary video is equal to a top & left image of a picture of the basic view. If sizes of the primary video and the secondary video are the same, the transmitting apparatus 100 can omit to send the relative position information, and the receiving apparatus 200 can omit to receive the relative position information.

Encoding of the secondary video data stream should not significantly differ from an image quality of a reconstructed basic view as the primary video. The encoding of the secondary video stream can adopt an encoding scheme similar to that of the primary view, or can be performed by selecting another moving image codec, a still image codec or the like. For example, the primary video can be encoded by using MPEG-4 AVC, and the secondary video can be encoded by using MPEG2. In this case, a decoding load of the secondary video can be reduced further. Alternatively, the primary video can be encoded by using MPEG2 video, and the secondary video can be encoded by using MPEG-4 AVC so as to reduce an increase of the transmission band due to the additional view. Also, the primary video can be encoded by using MPEG-4 AVC or MPEG2 video, and the secondary video can be encoded by using JPEG as a still image.

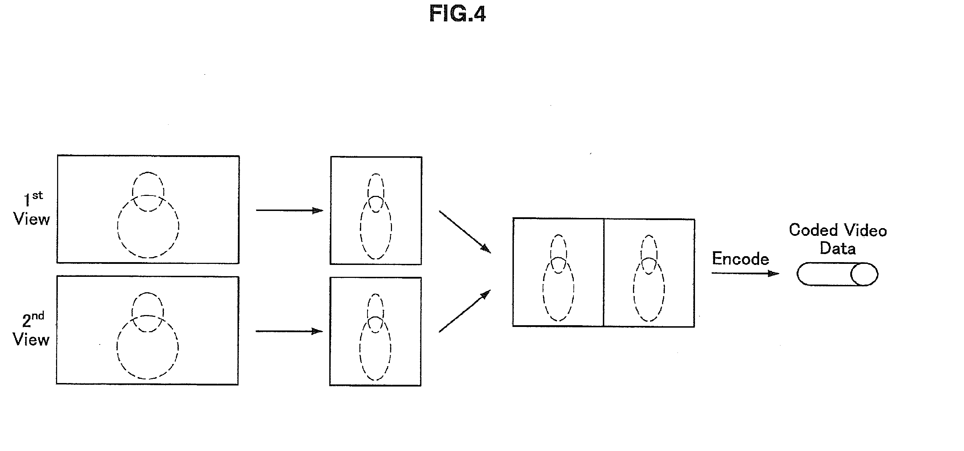

Figs. 4, 5, and 6 are schematic diagrams for explaining an encoding process in the transmitting apparatus 100. Here, Fig. 4 shows an example of encoding by uniting two view images into one frame. In this case, the 1st view and the 2nd view are compressed respectively in a horizontal direction of the screen, and are united and encoded to one frame. This process is similar to a normal side-by-side process.

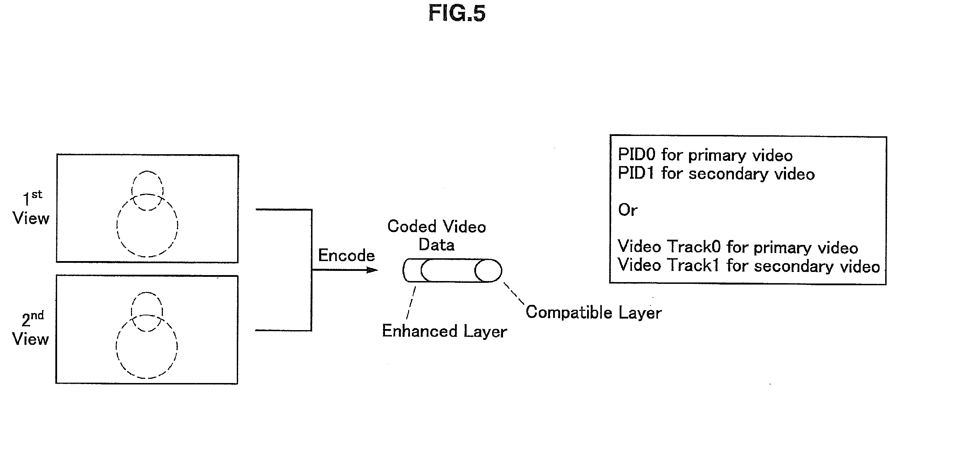

Also, Fig. 5 is a schematic diagram illustrating a codec of clipped regions of the 1st view and the 2nd view in the present embodiment. In this case, the 2nd view is encoded and added as an enhanced layer. A compatible layer in Fig. 5 shows the primary video data as normal 2D video data. The compatible layer can be transmitted with similar image quality to normal 2D video. As the enhanced layer supports a requisite minimum clipped region, data amount is smaller than that of the compatible layer. As shown in Fig. 5, the primary video and the secondary video are designated by information of a PID or a video track.

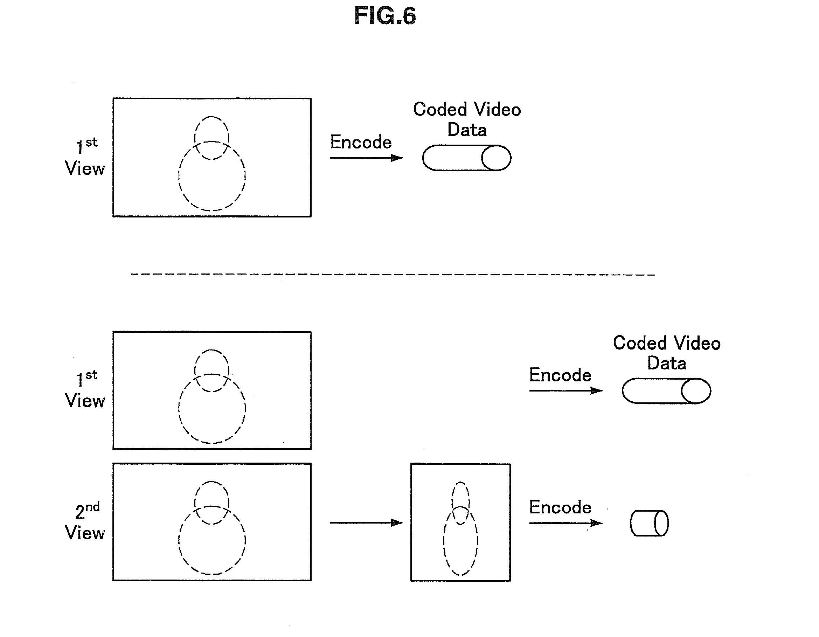

Fig. 6 is a schematic diagram illustrating an encoding scheme of a clipping process in the present embodiment. As shown in the upper illustration of Fig. 6, in a case where only the 1st view video is transmitted as a 2D video, only the 1st view video data is encoded. In this case, the primary video is encoded by the first encoder 108, and is transmitted to the receiving apparatus 200. The bottom illustration of Fig. 6 shows a case in which a video of a region clipped from the primary video as the 2nd view is encoded by using the scheme of the present embodiment described above.

As shown in the bottom illustration of Fig. 6, in the present embodiment, as for the 1st view, one frame data is encoded by the first encoder 108 as it is. On the other hand, as for the 2nd view, only a region clipped from the 1 st view is encoded by the second encoder 110. Consequently, as shown in the bottom illustration of Fig. 6, a data amount of coded video data of the clipped region of the 2nd view can be significantly reduced compared to a data amount of coded video data of the 1 st view. Therefore, a decoding load can be minimized in the receiving apparatus 200.

The multiplexer 112 shown in Fig. 1, in a multiplex stream of the whole system, assigns IDs to a video stream of the basic view (which corresponds to a normal 2D video signal) and a stream of the secondary view, and multiplexes them. In this way, the primary video and the secondary video can be associated by the IDs in the multiplexed stream.

Further, as a timestamp, a synchronizing method similar to that of the video data of the basic view is applied. A system management of multiplexing is performed by the CPU 102 with a table of PMT (Program Map Table) defined in a header of a transport stream (TS). In this case, the primary video is defined as a 2D video stream, and a stream of the additional view (the secondary video) is defined by being added to the 2D video stream under the PMT as described below, and IDs are assigned and managed.. According to the scheme, the primary video and the secondary video can be associated by the IDs of PES without changing a structure of the current transport stream.
PAT-----PMT1-----------Video (2D Basic)
-----------Audio
-----------Video (Secondary enhancement)
-------PMT2

The PMT designates a PID designation of each encoding signal, a kind or a state of ES, a PID of a PCR of a program, and the like. The receiving apparatus 200 associates the primary video with the secondary video by using the current scheme and performs a reversed process to the above encoding process, so that a desired display can be performed.

The multiplexer 112 multiplexes the data encoded by the first encoder 108 and the data encoded by the second encoder 110. The multiplexed data is transmitted from the output part 114 to the receiving apparatus 200.

### [3. Information for 3D object display]

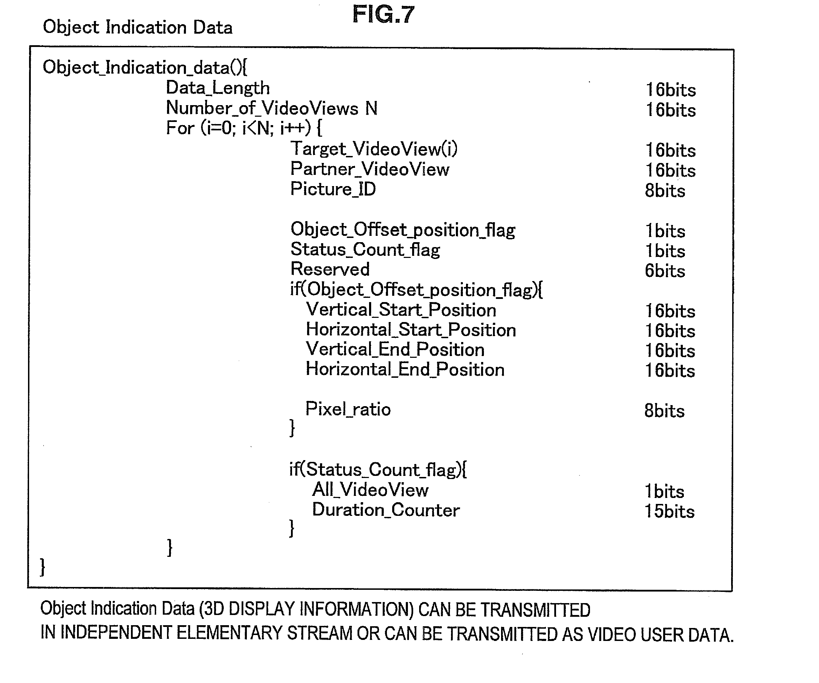

Fig. 7 is a schematic diagram illustrating object indication information for a 3D object display (hereinafter, might be referred to as 3D information). The object indication information shown in Fig. 7 is transmitted to the first encoder 108, the second encoder 110, and the multiplexer 112, and is inserted into video data. The object indication information can be transmitted as one elementary stream. In this case, the primary video, the secondary video, and the object indication information can be associated by timestamps. Further, the object indication information can be inserted into a picture unit of the primary video or the secondary video (a user data region of a picture header), as will be described later.

To explain each of the information shown in Fig. 7, Data_Length represents a data amount of the object indication information. Number_of_Video Views N represents the number of the secondary video clipped from a single primary video. The present embodiment describes an example in which a single secondary video is clipped from a single primary video. However, more than two secondary videos can be clipped, or N pieces of the secondary videos can be clipped. Target_video View(i) is information which represents Elementary PID of views covered by the information. This information designates the primary video with respect to the secondary video with an ID as identification information, and the primary video can be temporally associated with the secondary video by each frame.

In Fig. 7, Target_video View corresponds to a view of the primary video, and designates a PID of a corresponding view. Partner_video View corresponds to a view of the secondary video, and designates a PID of a corresponding view. For example, the corresponding views are designated by Target_video View=PID1 and Partner_Viewo View=PID0. Picture_ID is a value which is counted up by each picture, and is used as a chronological identifier of a still image.

Further, in each view, position information which designates a spatial position (a position in the screen) of the secondary video with respect to the primary video, and several flags Object_Offset_position_flag and Status_Count_flag for designating a display period of the secondary video are set.

When Object_Offset_position_flag is "1", a clipped region is designated by each data of vertical_Start_Position, Horizontal_Start_Position, Vertical_End_Position, and Horizontal_End_Position. The information is data which designate a start position and an end position of an object region of Partner_Viewo View with respect to a start point (0, 0) of Target_video View.

Pixel_ratio is information which designates a resolution ratio of an object of Partner_Viewo View with respect to a resolution ratio of Target_video View. When Pixel_ratio = 0x0, this indicates that a resolution conversion is not necessary.

When Status_Count_flag is "1", a 3D display continuation period using the secondary video is designated by All_Video View, and DurationCounter. When All_Video View is "1", a display continuation time control with Duration_Counter is applied not only to Target_Video View but also to all videoviews. Duration_Counter designates a display continuation time by the number of frames after starting a display. Note that, in a case of a moving image, the receiving apparatus 200 can recognize the display continuation period of the secondary video by inserting the object indication information into each picture. Duration_Counter is effective in designating the display continuation period, especially, when a still image is transmitted.

Note that, the transmitting apparatus 100 can transmit, instead of transmitting the secondary video data itself, a clipped region from the primary video and parallax information with respect to the primary video. In this case, the transmitting apparatus 100 designates the clipped region with each data of Vertical_Start_Position, Horizontal_Start_Position, Vertical_End_Position, and Horizontal_End_Position while transmitting the parallax information. The receiving apparatus 200 clips a region designated by each data of Vertical_Start_Position, Horizontal_Start_Position, Vertical_End_Position, and Horizontal_End_Position, and generates the secondary video with a parallax. As for a region without the parallax except for the clipped region, the primary video is copied to generate the secondary video. Consequently, the receiving apparatus 200 can generate a 3D video including the primary video and the secondary video.

Note that the object indication information shown in Fig. 7 can be transmitted in an independent elementary stream, or can be transmitted as user data of video data by unit of a picture.

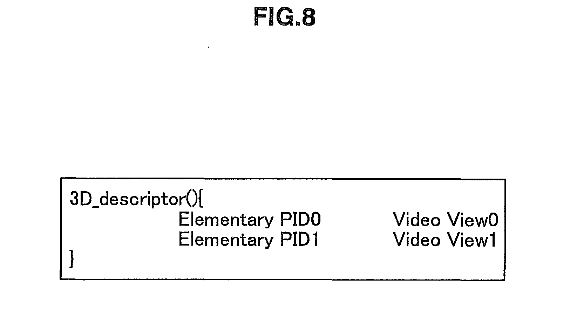

As described above, MPEG includes PMT (Program map table) as PSI (Program System Information) which describes stream information of content to be transmitted. The stream information of PMT includes PID (Packet ID) for selecting a packet such as an audio or a video, a stream_type, and a descriptor, so that what is used for encoding a video codec and an audio codec can be known. When 3D information shown in Fig. 7 is multiplexed within a Transport Stream, link information among views can be designated by 3D_descriptor in Program Map Section (TS Table ID=0x02). In this case, 3D_descriptor is defined as shown in Fig. 8.

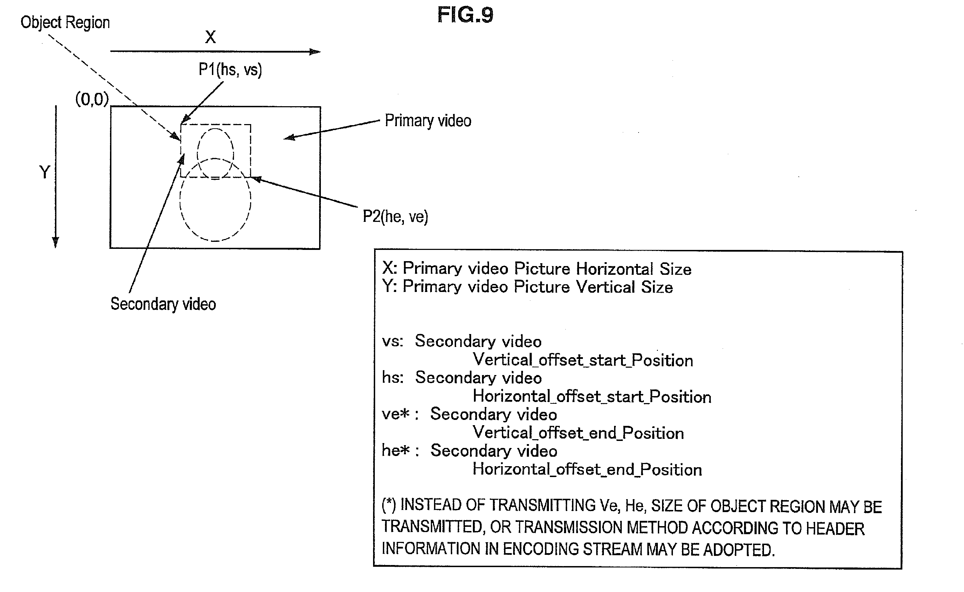

Fig. 9 is a schematic diagram illustrating information designated by Vertical_Start_Position, Horizontal_Start_Position, Vertical_End_Position, and Horizontal_End_Position in Fig. 7.

In Fig. 9, X represents a primary video picture horizontal size, and Y represents a primary video picture vertical size. In case of a HD size, X = 1920 pixels, and Y = 1080 pixels. Further, (hs, vs) represents a coordinate position of a start position P1 of the secondary video, and (he, ve) represents a coordinate position of an end position P2 of the secondary video. In the example shown in Fig. 9, the video clipped as the secondary video is a rectangular region which has (hs, vs) as the upper left vertex, and (he, ve) as the right bottom vertex. Note that an size of the object region can be transmitted instead of (he, ve). Further, the 3D information can be transmitted in a transmitting method according to header information in the coding stream.

In the above example, the clipped region of the secondary video from the primary video is designated by the information designated by Vertical_Start_Position, Horizontal_Start_Position, Vertical_End_Position, and Horizontal_End_Position. On the other hand, when transmitting a still image from the transmitting apparatus 100, for example, since a resolution of the still image is larger than that of a display panel (such as a full HD size) displayed by a moving image frame, a prescribed region is clipped from a source image of the still image and is transmitted. Thus, in transmitting the still image, each of the information shown in Fig. 7 can be used as information which designates the clipped region from the source image. In this case, both the primary image and the secondary image are clipped from the source image, and are transmitted to the receiving apparatus 200. The receiving apparatus 200 alternately displays the primary image and the secondary image, making it possible to view a 3D video of the still image.

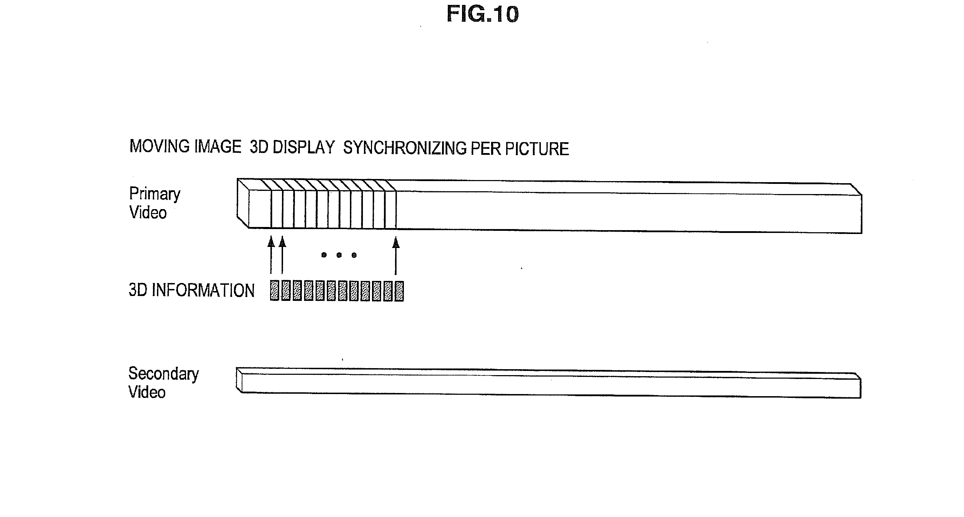

Fig. 10 is a schematic diagram illustrating an example of adding 3D information to a primary video when 3D information is added to a bit stream of video data. Fig. 9 shows an example of synchronizing the primary video and the secondary video per picture in a case of a 3D display of a moving image. The synchronization is carried out frame-by-frame by using a timestamp. In this case, the 3D information is inserted into every picture of the primary video at the first encoder 108. As one example, the 3D information can be synchronized with GOP (Groupe of Picture) or I picture of an encoding video and inserted into its header.

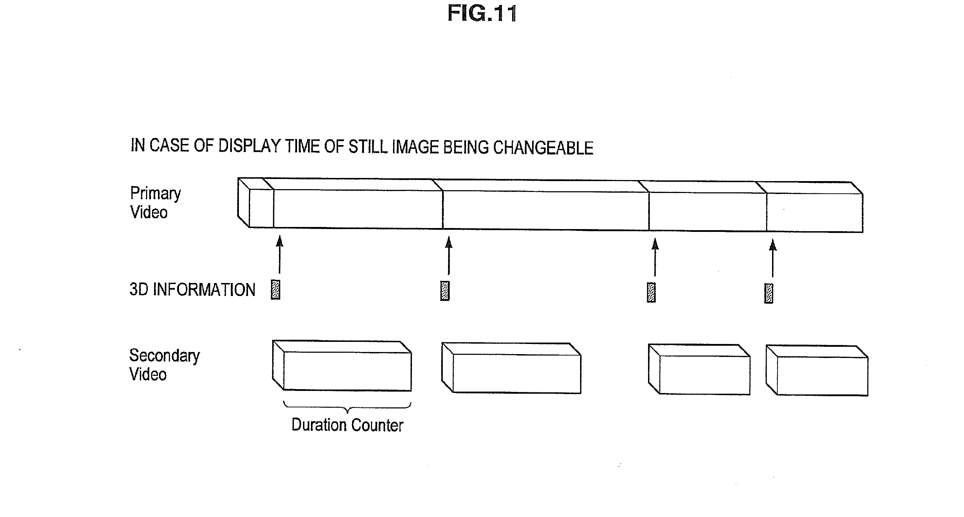

Fig. 11 is a schematic diagram illustrating an example of adding 3D information to a primary video when a display time can be changed as a secondary video is a still image or the like. In this case, as the secondary video does not change during a prescribed display time, the 3D information need not be inserted into each picture. Thus, the 3D information is inserted into each of the prescribed number of pictures at the first encoder 108 in accordance with the display time of the secondary video. The display time of the secondary video is designated by Duration_Counter shown in Fig. 7.

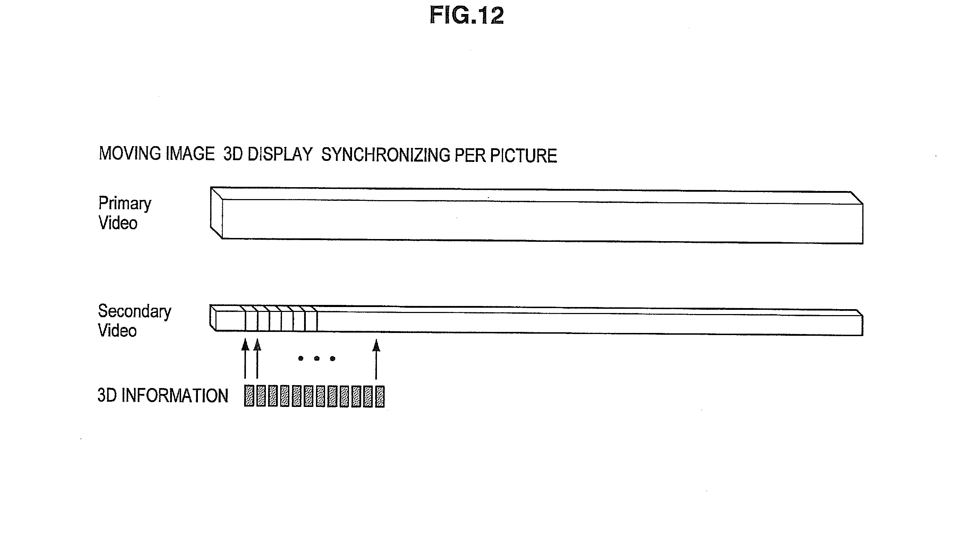

Fig. 12 is a schematic diagram illustrating an example of adding 3D information to a secondary video and of synchronizing a primary video and a secondary video per picture of moving image. In this case, the 3D information is inserted into every secondary picture at the second encoder 110. As one example, the 3D information can be synchronized with GOP or I picture of an encoding video and inserted.

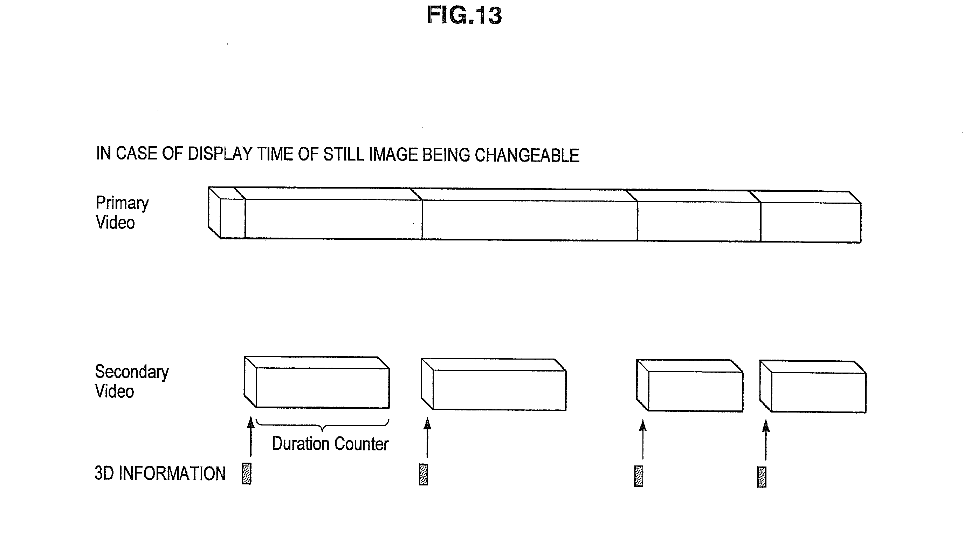

Fig. 13 is a schematic diagram illustrating an example of adding 3D information to a secondary video when a display time can be changed as the secondary video is a still image or the like. In this case, as the secondary video does not change during a prescribed display time, the 3D information is inserted into each of the prescribed numbers of pictures at the second encoder 110 in accordance with the display time. In this case, the display time of the secondary video is also designated by Duration_Counter shown in Fig. 7.

### [4. A configuration example of a receiving apparatus]

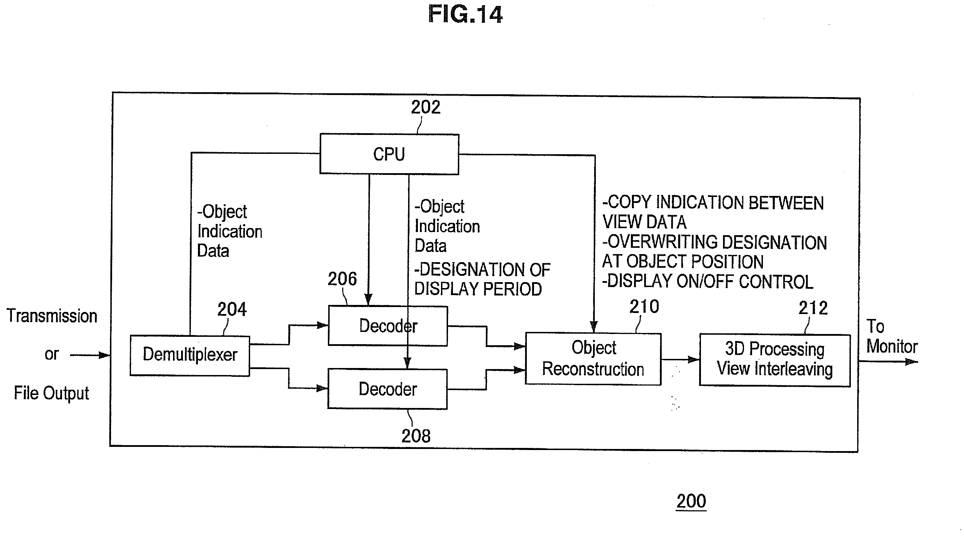

Next, a configuration of the receiving apparatus 200 will be described. Fig. 14 is a schematic diagram illustrating a configuration example of the receiving apparatus 200. As shown in Fig. 14, the receiving apparatus 200 includes a CPU 202, a demultiplexer 204, a first decoder 206, a second decoder 208, an object reconstruction part 210, and a 3D processing view interleaving part 212. Further, the receiving apparatus 200 includes a display including a liquid crystal display panel and the like. Note that, each function block shown in Fig. 14 can be constituted by a circuit (hardware), or the CPU 202 and software (a program) for causing the CPU 202 to function. In this case, the program can be stored in a recording medium such as a memory that the receiving apparatus 200 includes, or a recording medium outside the receiving apparatus 200.

A bit stream transmitted from the transmitting apparatus 100, or an output of a video file is input to the demultiplexer 204. The demultiplexer 204 separates input data into video data, audio data, text data and so on, and transmits the video data to the first decoder 108 and the second decoder 110. Further, the demultiplexer 204 extracts object indication information from the bit stream, and transmits it to the CPU 202.

The demultiplexer 204 separates primary video data and secondary video data, and transmits the primary video data to the first decoder 206 and transmits the secondary video data to the second decoder 208.

Since a format of an input to the first and second decoders 206 and 208 is basically the same as that of the existing 2D video decoding, decoding can be carried out by using a scheme of current digital video signal format. In a case where a 3D video need not be viewed, a 2D video viewing is possible by decoding only the primary video. In a case where the secondary video does not exist, decoding of normal 2D video data is carried out at the first decoder 206.

The CPU 202 controls the first decoder 206 and the second decoder 208 based on object indication information transmitted from the demultiplexer 204. The CPU 202 transmits information which designates a display period to the second decoder 208. Consequently, the second decoder 208 recognizes that the secondary video exists during the designated display period, and executes decoding of the secondary video.

The object reconstruction part 210 copies video data between the 1st view and the 2nd view, and have the image overwrite at an object position. Consequently, decoded primary video and secondary video are overwritten to generate a video of the 2nd view. As for the primary video, video data decoded at the first decoder 206 is input to the 3D processing view interleaving part 212.

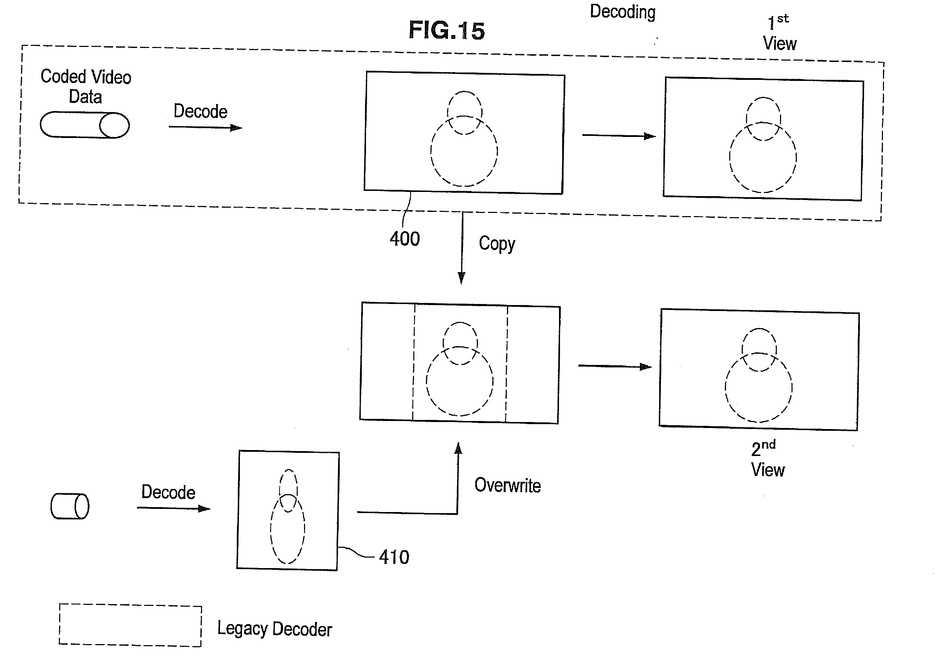

Fig. 15 is a schematic diagram illustrating a process in the object reconstruction part 210. As shown in Fig. 15, the primary video data of the 1 st view is decoded at the first decoder 206, and a primary video 400 is acquired. This process is executable with the legacy receiving apparatus 200. Meanwhile, the secondary video data is decoded at the second decoder, and a secondary video 410 is acquired. The object reconstruction part 210 outputs the primary video 400 as the 1st view. Further, the object reconstruction part 210 copies the primary video 400, and has the secondary video 410 overwrtie the copied primary video 400 by displacing the secondary video 410 by an offset amount to output video data of the 2nd view. Here, the offset amount is designated by the above described Vertical_Start_Position, Horizontal_Start_Position, Vertical_End_Position, Horizontal_End_Position, and is transmitted from the demultiplexer 204 to the CPU 202. Further, in a case where the object indication information is inserted into each picture, the object indication information can be acquired from the first decoder 206 and the second decoder 208. Further, the object reconstruction part 210 executes a temporal synchronization of the primary video 400 and the secondary video 410 based on a timestamp of an elementary stream and IDs (PID) of the primary video and the secondary video.
Note that, as described above, in a case where the secondary video data itself is not transmitted from the transmitting apparatus 100, and the clipped region from the primary video and the parallax information with respect to the primary video are transmitted, the receiving apparatus 200 generates the secondary video 410 based on the clipped region. Further, the object reconstruction part 210 has the generated secondary video 410 overwrite the primary video 400 by displacing the secondary video 410 by the parallax amount to output the image of the 2nd view.
Further, in a case where both the primary image and the secondary image are clipped from a source image at the transmitting apparatus 100, the object reconstruction part 210 displaces the clipped primary image and secondary image by the offset amount to output 1 st view and 2nd view videos. Consequently, by alternately displaying the primary image and the secondary image, a 3D video viewing of a still image becomes possible.

The video data of the 1st view and the 2nd view output from the object reconstruction part 210 are input to the 3 D processing view interleaving part 212, the input image data of the 1st view and the 2nd view are subjected to prescribed processing such as a high frame rate, and are output to the display panel. In a case where the 1st view is taken as an image L for left eyes and the 2nd view is taken as an image R for right eyes, the image L for left eyes and the image R for right eyes are alternately displayed on the display panel at a prescribed frame rate. Further, the image L for left eyes is displayed at a timing when the liquid crystal shutter 300b of the appreciation glasses 300 opens, and the image R for right eyes is displayed at a timing when the liquid crystal shutter 300a opens. Therefore, the user's both eyes recognize the image L for left eyes and the image R for right eyes having a parallax, which realizes a 3D display.

According to the present embodiment as described above, since the 3D region is limited to the clipped region, a demand to the transmission band can be reduced to requisite minimum. Further, as the increase of the decoding load to the receiving apparatus 200 is limited to the region corresponding to the stereoscopic display of the additional view which is added to the 2D video, the 2D display and the 3D display using the existing legacy television receivers becomes possible. Therefore, a backward compatibility with the existing legacy television receivers can be maintained by using the scheme of the existing digital video signal format. Further, since the receiving apparatus 200 additionally decodes only the appropriate region of the additional view, the decoding load applied to the existing 2D decoding can be reduced to requisite minimum. Consequently, by causing the CPU other than the decoders to perform the additional decoding load, load balance in system assumption can be improved.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

### Reference Signs List

- 100: Transmitting apparatus
- 108: First encoder
- 110: Second encoder
- 114: Output part
- 200: Receiving apparatus
- 206: First encoder
- 208: Second encoder
- 202: CPU
- 210: Object reconstruction part

## Claims

1. A receiving apparatus comprising:
a first decoder for decoding a first image signal;
a second decoder for decoding a second image signal corresponding to an image of at least a part of a region of a first image frame of the first image signal;
an information acquisition part for acquiring object indication information including spatial position information of the region with respect to the first image frame; and
a video overwriting part for having the image of the region overwrite the first image frame to generate a second image frame based on the position information.

2. The receiving apparatus according to claim 1, further comprising:
a display for displaying an image of the first image frame and an image of the second image frame periodically.

3. The receiving apparatus according to claim 1,
wherein the first image frame is a moving image frame, the object indication information includes temporal synchronization information of the image of the region with respect to the first image frame, and
wherein the video overwriting part has the image of the region overwrite the first image frame based on the position information and the synchronization information.

4. The receiving apparatus according to claim 3,
wherein the object indication information is included in a picture header of the image frames of the first image signal or the second image signal.

5. The receiving apparatus according to claim 3,
wherein the object indication information is transmitted in a separate stream from the first image signal and the second image signal, and is associated with the first image signal and the second image signal by a timestamp.

6. The receiving apparatus according to claim 1,
wherein the information acquisition part does not acquire the object indication information in a case where a size of the first image frame of the first image signal and a size of the image frame of the second image signal are the same.

7. The receiving apparatus according to claim 1,
wherein the first decoder and the second decoder execute respective decoding by different decoding methods.

8. A transmitting apparatus comprising:
a first encoder for encoding a first image signal;
a second encoder for encoding a second image signal corresponding to an image of at least a part of a region of an image frame of the first image signal; and
a transmitter for transmitting the encoded first image signal, the encoded second image signal, and object indication information including spatial position information of the region with respect to the image frame.

9. The transmitting apparatus according to claim 8,
wherein the image frame is a moving image frame, and the object indication information includes temporal synchronization information of the image of the region with respect to the image frame.

10. The transmitting apparatus according to claim 8,
wherein the object indication information is inserted into a picture header of the image frame of the first image signal or the second image signal.

11. The transmitting apparatus according to claim 8,
wherein the object indication information is transmitted in a separate stream from the first image signal and the second image signal, and is associated with the first image signal and the second image signal by a timestamp.

12. The transmitting apparatus according to claim 8, further comprising:
an image separation part for separating the image of the region from the image frame,
wherein the second encoder encodes the second image signal corresponding to the image of the region separated by the image separation part.

13. The transmitting apparatus according to claim 12,
wherein the image separation part separates the image of the region from the image frame while changing a position of the region within the image frame in accordance with a movement of an object corresponding to the region.

14. The transmitting apparatus according to claim 8,
wherein the transmitter does not transmit the object indication information in a case where a size of the first image frame of the first image signal and a size of the image frame of the second image signal are the same.

15. The transmitting apparatus according to claim 8,
wherein the first encoder and the second encoder execute respective encoding by different encoding methods.

16. A communication system comprising:
a transmitting apparatus including
a first encoder for encoding a first image signal,
a second encoder for encoding a second image signal corresponding to an image of at least a part of a region of an image frame of the first image signal, and
a transmitter for transmitting the encoded first image signal, the encoded second image signal, and object indication information including spatial position information of the region with respect to the image frame; and
a receiving apparatus including
a first decoder for decoding the first image signal,
a second decoder for decoding the second image signal,
an information acquisition part for acquiring the object indication information, and
a video overwriting part for having the image of the region overwrite the first image frame of the first image signal to generate a second image frame based on the position information included in the object indication information.

17. A receiving apparatus control method comprising the steps of:
decoding a first image signal;
decoding a second image signal corresponding to an image of at least a part of a region of a first image frame of the first image signal;
acquiring object indication information including spatial position information of the region with respect to the first image frame; and
having the image of the region overwrite the first image frame based on the position information to generate a second image frame.

18. A program for causing a computer to function as:
means for decoding a first image signal;
means for decoding a second image signal corresponding to an image of at least a part of a region of a first image frame of the first image signal;
means for acquiring object indication information including spatial position information of the region with respect to the first image frame; and
means for having the image of the region overwrite the first image frame based on the position information to generate a second image frame.

19. A receiving apparatus comprising:
a first decoder for decoding a first image signal;
an information acquisition part for acquiring spatial position information of at least a part of a region of a first image frame of the first image signal, and object indication information including an offset amount of the region with respect to the first image frame; and
a video overwriting part for having the image of the region overwrite the first image frame to generate a second image frame based on the object indication information.

20. A receiving apparatus comprising:
a first decoder for decoding a first image signal corresponding to a first image clipped from a source image of a still image;
a second decoder for decoding a second image signal corresponding to a second image clipped from a source image of a still image;
a position information acquisition part for acquiring spatial position information of the first image and the second image; and
a display for displaying the first image and the second image periodically in a state that the first image and the second image are relatively offset based on the position information.
